# EUROPEAN PATENT APPLICATION

(11) **EP 1 465 412 A2**
(43) Date of publication of application: **06.10.2004**
(21) Application number: 04006241.6
(22) Date of filing: 16.03.2004
(51) Int. Cl.: H04N 5/232, H04N 7/18

(54) **Network image pickup apparatus, network image pickup system, and network image pickup method**

(30) Priority: 31.03.2003 JP 2003095675
(71) Applicant: Kabushiki Kaisha Toshiba, Tokyo (JP)
(72) Inventor: Yoshimura, Hiroshi c/o Toshiba Corporation, Minato-ku Tokyo 105-8001 (JP); Ambiru, Yasuhito c/o Toshiba Corporation, Minato-ku Tokyo 105-8001 (JP); Ooshima, Isao c/o Toshiba Corporation, Minato-ku Tokyo 105-8001 (JP)
(74) Representative: Henkel, Feiler & Hänzel

(57) **Abstract**

An image pickup apparatus having an image pickup section (11, 13) which picks up an image, a communication section (18, 19) which transmits the image to an external device, and which receives control information from the external device, and a processing section (20) which, in a state in which the image is displayed on a display screen of the external device, when a predetermined region on the display screen is designated, transmits regional information to the external device via the communication section in order to display the predetermined region within the image, and carries out movement detection of the image which is picked up at the image pickup section on the basis of the predetermined region, and regional setting of movement detection is easily possible on a screen of a PC 26, or the like, on a network.

## Description

The present invention relates to an image pickup apparatus such as a network camera or the like, and in particular, to an image pickup apparatus, an image pickup system, and an image pickup method which carry out setting of a movement detecting range of a network camera.

Recently, accompanying popularization of digital equipment, with respect to picture-information machinery such as a digital camera and the like as well, a large number of types thereof have been developed and manufactured. As such a picture-information machine, for example, an image pickup apparatus such as a monitoring camera having a network function has been used.

As a prior art relating thereto, from Japanese Patent Application Laid-Open No. 9-102948 which is a Japanese laid-open patent document, there is known a video camera system such as a monitoring camera having a network function, and by providing the system with a movement detecting function, the system detects that there is an abnormal situation when the system recognizes a moving object in a monitoring area.

However, in the above-described prior art, a concrete method as to how the movement detecting range, which is the monitoring area, is to be set via a network is not described, and there is the problem that the user cannot easily set a desired region as the movement detecting range.

An object of the present invention is to provide an image pickup apparatus, an image pickup system, and an image pickup method which can exactly put an object within a movement detecting range due to the movement detecting range being easily set by a PC screen or the like.

In order to solve the above-described problems, the present invention provides an image pickup apparatus comprising an image pickup section which picks up an image, a communication section which transmits the picked-up image to an external device, and which receives control information from the external device, and a processing section which, in a state in which the image is displayed on a display screen of the external device, when a predetermined region on the display screen is designated, transmits regional information to the external device via the communication section in order to display the predetermined region within the image, and carries out movement detection of the image which is picked up at the image pickup section on the basis of the predetermined region.

The image pickup apparatus according to the present invention is an image pickup apparatus which displays a picked-up screen and can control the operations by a PC (Personal Computer) or the like via an Ethernet, a wireless LAN (Local Area Network), or the like, and the image pickup apparatus receives a coordinate signal of a predetermined region which is given from a pointing device such as a mouse of the PC or the like, and generates a signal in order to display the region shown by the coordinate signal as a movement detecting range within an image region which is being picked up by a camera. Accordingly, while monitoring, on the PC screen, the screen which is currently being picked up, the user can intuitively designate the region by the operation of enclosing, by the mouse or the like, the object in the screen whose movement the user especially wishes to monitor (for example, a door in a room, a specific still object, etc.), or the like. In accordance therewith, it is possible to reliably carry out the following movement detecting processings.

Furthermore, for example, when driving functions in the panning direction and the tilting direction are provided to the image pickup apparatus according to the present invention, the image pickup apparatus can designate a movement detecting range as a predetermined region within not only a region in the screen which is currently being picked up, but also the entire image pickup possible screen which can be picked up by moving the camera. The movement detecting range is once designated and registered, even after the camera is automatically moved, the following movement detecting processing within the movement detecting range can be reliably carried out. For example, in a movement detecting operation carried out by an automatic network monitoring camera or the like, setting of a movement detecting range within an important region in a room can be easily and reliably carried out.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an embodiment of a configuration of an image pickup apparatus according to the present invention.
FIG. 2 is an explanatory diagram showing an example of a method for connecting the image pickup apparatus according to the invention and a network.
FIG. 3 is a cross-sectional view showing the embodiment of the configuration of the image pickup apparatus according to the invention.
FIG. 4 is an explanatory diagram showing an example of the operations of a method for setting a movement detecting range of a movement detecting processing of the image pickup apparatus according to the invention.
FIG. 5 is a flowchart showing an example of a method for setting a movement detecting range of the image pickup apparatus according to the invention.
FIG. 6 is an explanatory diagram for explanation of the relationship between an image pickup possible screen AA and the movement detecting range in the method for setting a movement detecting range of the image pickup apparatus according to the invention.

Hereinafter, a network camera which is an image pickup apparatus according to the present invention will be described in detail with reference to the drawings.

### <Network camera which is an image pickup apparatus according to the invention>

### (Configuration)

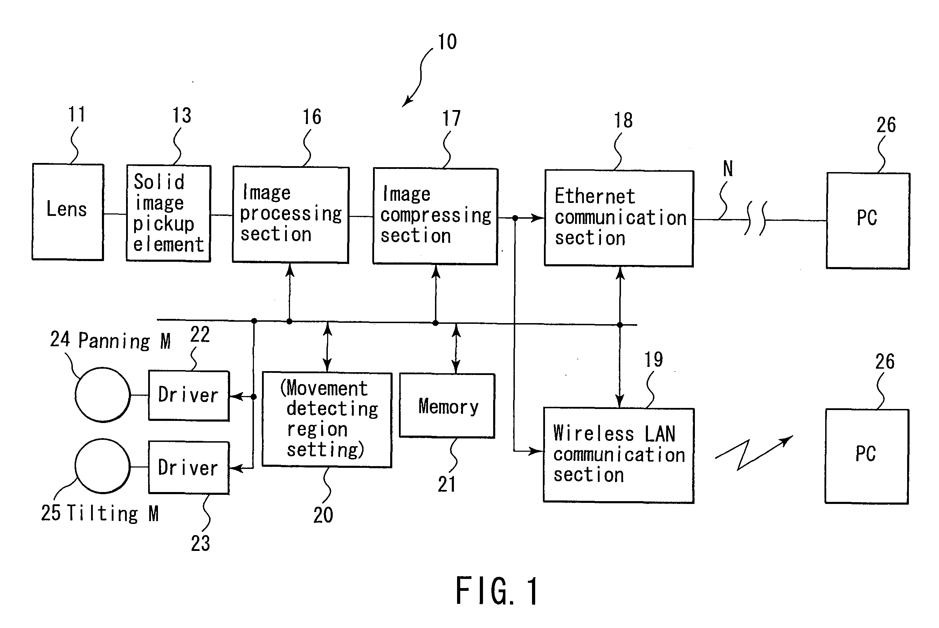

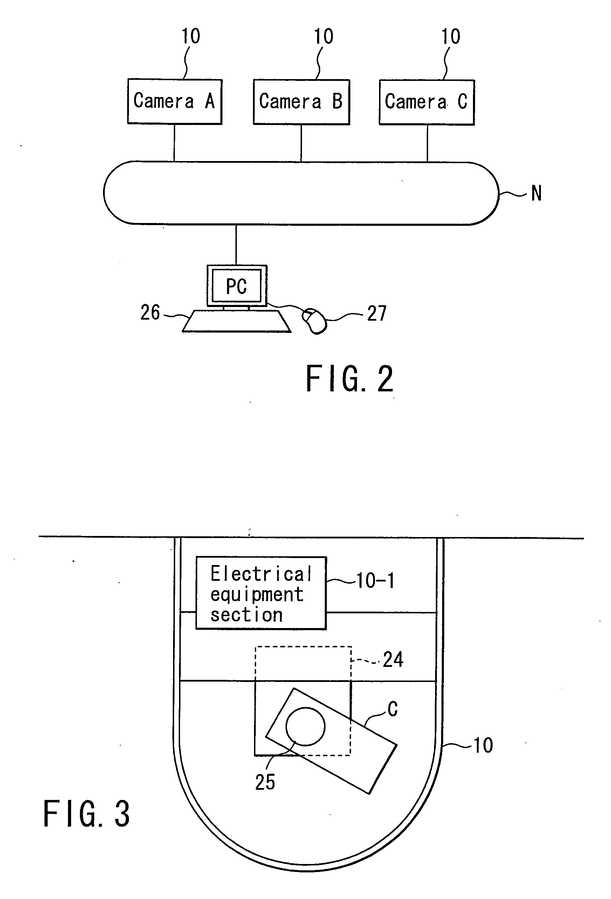

An image pickup apparatus and an image pickup system according to the invention will be described hereinafter by using the drawings, and by using the case of a PC (Personal Computer) connected to a network camera and a network as an example. FIG. 1 is a block diagram showing an embodiment of a configuration of the image pickup apparatus according to the invention, FIG. 2 is an explanatory diagram showing an example of a method for connecting the image pickup apparatus according to the invention and the network, and FIG. 3 is a cross-sectional view showing the embodiment of the configuration of the image pickup apparatus according to the invention.

As shown in FIG. 1, a network camera apparatus 10 which is the image pickup apparatus according to the invention has an objective lens 11 and a solid image pickup element 13 which receives incident light which passed has through the objective lens 11 and outputs a detection signal corresponding to the incident light, and which is formed from a CCD (Charge Coupled Device) or the like. Moreover, the image pickup apparatus 10 has an image processing section 16 receiving the output from the solid image pickup element 13, and an image compressing section 17 carrying out compression processings such as MPEG compression, JPEG compression, or the like, with respect to an image signal which has been processed at the image processing section 16. At the image processing section 16, image processings such as, for example, sharpness processing, contrast processing, gamma correction, white balance processing, pixel addition processing, and the like, are applied with respect to the inputted image signal.

Moreover, the network camera apparatus 10 has an MPU (Main Processing Unit) 20 which controls the entire processing operations, and which controls a movement detecting operation and setting of a movement detecting range which are the feature of the present invention and which will be described later, and a memory 21 which stores a program managing these operations, and which provides a work area for carrying out the respective processing operations with respect to the image signal, and in which image data for alarm indication indicated at the time of the movement detection or the like.

Further, the network camera apparatus 10 has an Ethernet communication section 18 and a wireless LAN (Local Area Network) communication section 19 which are connected to the MPU 20 via a data bus, and carries out communication processing with, for example, a PC 26 at the exterior thereof via a wire network N or a wireless network.

Moreover, the network camera apparatus 10 has a panning driver 22 for driving a camera unit C in the panning direction and a panning motor 24 such as a stepping motor or the like, and a tilting driver 23 for driving the camera unit C in the tilting direction and a tilting motor 25 such as a stepping motor or the like, which are connected to the MPU 20 via the data bus and are controlled by the MPU 20. Here, the camera unit C has at least the objective lens 11 and the solid image pickup element 13 which were described above.

Further, as shown in FIG. 2, a plurality of the network camera apparatuses 10 can be provided via the network N. Moreover, driving processings, in the panning direction and the tilting direction, of the network camera apparatus 10 are possible by the PC 26 or the like, and furthermore, monitoring and recording/playback processing of the image signal picked up by the network camera apparatus 10 are possible. In addition, a pointing device such as a mouse 27 or the like is connected to the PC 26, and in particular, the PC 26 can easily carry out the movement detecting range setting which will be described later.

Moreover, as shown in FIG. 3, the network camera apparatus 10 has the camera unit C, and the panning motor 24 for driving the camera unit C in the panning direction, and the tilting motor 25 for driving the camera unit C in the tilting direction, and further has an electrical equipment section 10-1 having a configuration other than those shown in FIG. 1.

### (Basic operations)

The network camera apparatus 10 having such a configuration carries out basic operations as described hereinafter. Namely, the network camera apparatus 10 can carry out the image pickup operation in which incident light from an object is received and an image signal corresponding to the picked-up screen is supplied via a network or the like, and the camera driving operation in which the direction of the camera unit C is driven, for example, in the panning direction and the tilting direction, and further, the respective operation modes (for example, a movement detecting operation) based on the picked-up image signal, various types of setting operations such as setting of a movement detecting range which will be described later, and the like, the self-testing operation, or the like.

Namely, the image pickup operation is carried out by the control of the MPU 20 due to an instruction signal being received from the PC 26 which is a control device, or the like, via the network N (or the wireless network) in accordance with an operation program stored in the memory 21. The solid image pickup element 13 which has received the incident light from the object via the objective lens 11 supplies a detection signal corresponding to the incident light to the image processing section 16, and applies the predetermined image processing thereto. Thereafter, image compression such as JPEG compression, MPEG compression, or the like is carried out at the image compressing section 18, and the compressed image is outputted to the exterior via the Ethernet communication section 18 or the wireless LAN communication section 19.

In the camera driving operation, after zero coordinate adjustment is carried out at the panning motor 24 and the tilting motor 25 which are the stepping motors, the MPU 20 always recognizes the current direction of the camera unit C. In accordance therewith, the MPU 20 always manages the coordinate of the screen which the camera unit C has currently picked up, and at the same time when the picked-up screen is changed due to the camera unit C being driven in the panning direction or the tilting direction in accordance with an operation control signal supplied to a driver from the MPU 20, the MPU 20 always recognizes the coordinate of the current picked-up screen. Accordingly, while watching, from the screen of the PC 26 or the like connected via the network, the picked-up screen which corresponds to the image signal which the image pickup apparatus 10 is currently continuing to supply, the user can move the camera unit C in the panning direction or the tilting direction, and can watch a picked-up screen which corresponds to the movement. Further, the MPU 20 recognizes and manages the coordinates of the current picked-up screen, and the user can acquire the coordinate information of the current picked-up screen, for example, on the PC 26.

In the respective operation modes, for example, the movement detecting operation mode, the image pickup apparatus 10 automatically detects a movement of an image within an arbitrary region set by the user. Namely, an observation region of the movement detection in the picked-up screen is set in accordance with the operation by the user on the setting screen of the movement detecting operation mode, and thereafter, when variation greater than or equal to a predetermined value of the picked-up screen is detected at the observation region during a set period, the MPU 20 determines that there is movement detection, and carries out, for example, a warning operation, i.e., an operation such as outputting an alarm signal, adding an alarm screen stored in the memory 21 to the image signal and outputting, or the like.

Further, the movement detecting operation is carried out in various forms. One example is a method in which a finite difference per unit time of the luminance signal among the detection signals from the image pickup section is determined, and when the finite difference is greater than or equal to a threshold value, it is determined that there is movement.

Moreover, when the detection signal is in the form of YMCK, with respect not only to the luminance signal, but also to Y signal, M signal, and C signal in the same way, a method in which a finite difference per unit time is determined, and when the finite difference is greater than or equal to a threshold value, it is determined that there is movement, is possible.

Furthermore, a method is possible in which a contour in the detection signal is detected, and the movement of the contour is observed each unit time, and when there is movement greater than or equal to a threshold value, it is determined that movement is detected. Moreover, it goes without saying that the movement detecting operation of the detection signal is possible by methods other than these.

### (Setting operation of movement detecting region)

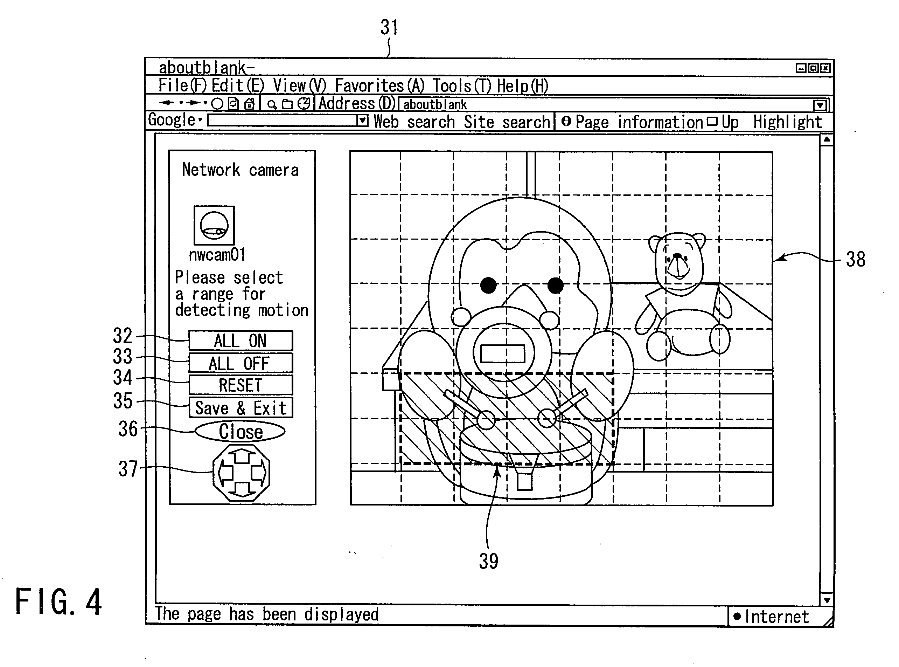

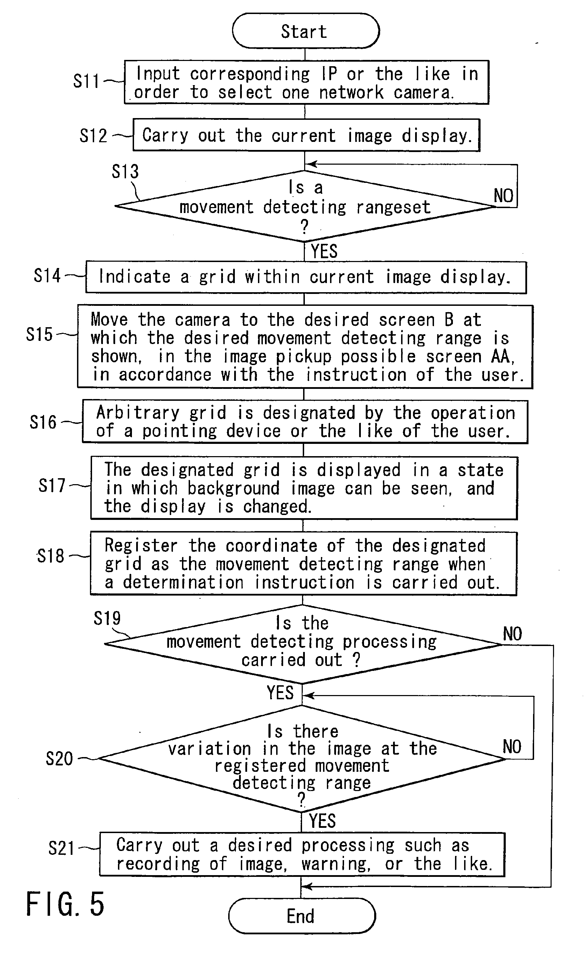

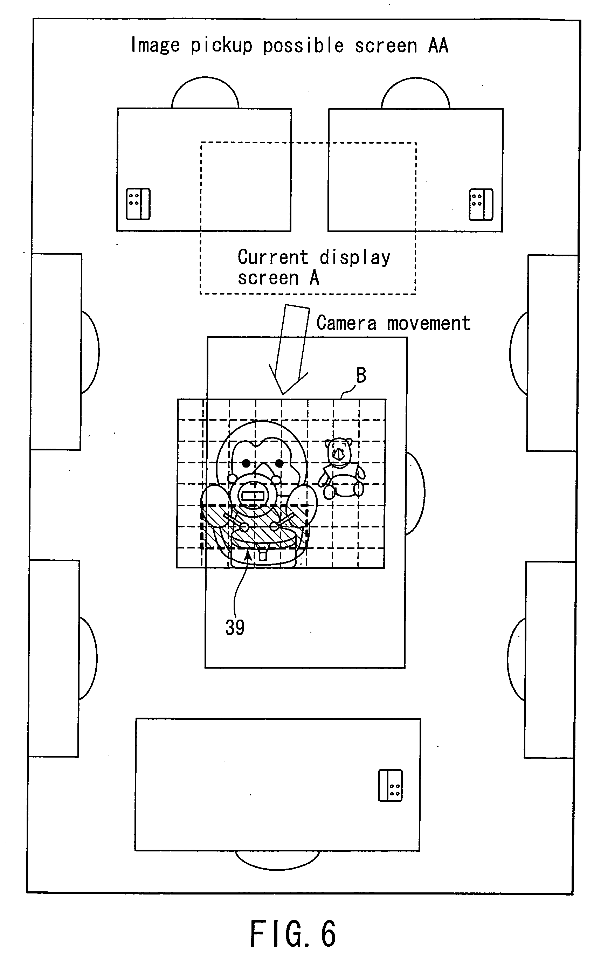

The setting operation of the movement detecting range according to the invention in the image pickup apparatus 10 according to the invention carrying out such basic operations will be described in detail hereinafter with reference to a flowchart. FIG. 4 is an explanatory diagram showing an example of the operations of a method for setting a movement detecting range of a movement detecting processing of the image pickup apparatus according to the invention, FIG. 5 is a flowchart showing an example of the method for setting a movement detecting range of the image pickup apparatus according to the invention, and FIG. 6 is an explanatory diagram for explanation of the relationship between an image pickup possible screen AA and the movement detecting range in the method for setting a movement detecting range of the image pickup apparatus according to the invention.

With respect to the setting of the movement detecting range of the image pickup apparatus 10 according to the invention, at least two cases of a case in which the movement detecting range is set within the current display screen A which is currently displayed, and a case in which, as shown in FIG. 6, in the image pickup possible screen AA of a range in which pickup is possible within the range of the driving function of the image pickup apparatus 10, the screen is moved from the current display screen A to the desired screen B due to the camera unit C being moved in the panning direction or in the tilting direction by the operation of the user, and an arbitrary region in the desired screen B is set as a movement detecting range 39, are possible.

Here, as an example of the setting operation of the movement detecting range according to the invention, the case in which the screen is moved from the current display screen A to the desired screen B due to the camera unit C being moved in the panning direction or in the tilting direction by the operation of the user within the image pickup possible screen AA, and an arbitrary region in the desired screen B is set as the movement detecting range 39, will be described hereinafter with reference to the flowchart of FIG. 5.

First, an IP address signal designated from a control device such as the PC 26 or the like on the network is supplied to the image pickup apparatus 10 according to the invention, and when it is determined that the Ethernet communication section 18 or the wireless LAN communication section 19 of the image pickup apparatus 10 corresponds to the IP address, one image pickup apparatus 10. is operated under the control of the PC 26 or the like (S11). Here, when the image pickup apparatus 10 receives an instruction of the image pickup operation from the PC 26, the image pickup operation is carried out under the control of the MPU 20, and a detection signal corresponding to the incident light is supplied to the image processing section 16 from the solid image pickup element 13. At the image processing section 16, image processings such as, for example, sharpness processing, contrast processing, gamma correction, white balance processing, pixel addition processing, and the like, are applied with respect to the inputted image signal. Thereafter, JPEG compression or MPEG compression is applied thereto at the image compressing section 17, and the image signals outputted via one of the Ethernet communication section 18 and the wireless LAN communication section 19. The outputted image signal is displayed as, for example, a screen of a browser application 31 shown in FIG. 4 after the expansion processing is applied thereto, for example, at the PC 26 (S13).

Here, when the mode of setting the movement detecting range is selected by the user, at the screen of the browser application 31 as shown in FIG. 4, a current picked-up screen 38 is displayed along with operation icons 32 through 37 at the operating region. At this time, as an example, the screen is preferably displayed so as to be divided into a plurality of blocks (grid) (S14). Namely, due to the unit of the region at which the movement detecting range can be set being concretely displayed, the user can reliably carry out the setting of the region with respect to the object.

Here, the operation icons are icons for the movement detecting range setting modes, and an 'ALL ON' icon 32 is an icon for making the entire screen be the movement detecting range, an 'ALL OFF' icon 33 is an icon for canceling the movement detecting range on the entire screen, a 'RESET' icon 34 is an icon for canceling the movement detecting range designated by a pointing device such as a mouse or the like, and for returning to the default value, a 'Save & Exit' icon 35 is an icon for determining the movement detecting range designated by the pointing device such as a mouse or the like, and for completing the movement detecting range setting mode, a 'Close' icon 36 is an icon for closing the screen, and an arrow icon 37 is an icon for moving the camera unit C in the panning direction or the tilting direction.

As shown by FIG. 6, the movement detecting range according to the invention is not only set in the current display screen A, but also can be set to a desired region provided that the desired region is in the image pickup possible screen AA in which image pickup is possible due to the camera unit C being driven in the panning direction or the tilting direction. Accordingly, the user moves the camera from the current display screen A to the desired screen B which are shown in FIG. 6 by operating the arrow icon 37 or the like (S15). Further, arbitrary blocks (grid) can be designated as the movement detecting range 39 by the operation of the pointing device such as the mouse 27 or the like of the user (S16). When the MPU 20 receives the coordinate information and the instruction signal from the PC 26 or the like via the network, as shown in FIG. 4, the MPU 20 carries out an active display by translucent rectangular blocks or the like such that the region serves as the movement detecting range 39 in a state in which the background image can be seen (S17).

Note that, here, when the user judges that there is problems in this region, and supplies the instruction signal to the MPU 20 via the network by the operation of the mouse or the like, the active display is cancelled, and the region returns to a normal image picked-up display which is the same as the other region. In accordance therewith, extremely intuitive designation of a region by the user is possible.

Finally, in order to determine the region which is currently active-displayed as the movement detecting range 39, the user operates, for example, the 'Save & Exit' icon 35, and the determination signal is supplied as the instruction signal to the MPU 20 via the network. When the determination instruction is carried out, the coordinate of the designated blocks (grid) is registered as a new movement detecting range, for example, in the memory 21 or the like (S18).

In accordance therewith, on the setting screen of FIG. 4, the image within the movement detecting range 39 as well is displayed, and it is possible for the user to reliably set an object, which the user wishes to be the object of the movement detecting operation, to be within the movement detecting range by an extremely easy and intuitive operation.

Thereafter, when the MPU 20 of the image pickup apparatus 10 receives the instruction of the user via the network in order to carry out the movement detecting processing, the movement detecting processing is carried out (S19). Namely, the above-described registered coordinate information of the movement detecting range is read from the memory 21 or the like, and when the variation greater than or equal to a predetermined value of the picked-up screen is detected within the movement detecting range which is the observation region during the set period, the MPU 20 determines that there is movement detection. Further, the MPU 20 carries out, for example, a warning operation, i.e., an operation such as outputting an alarm signal, adding a warning screen (an alarm screen) to the image signal and outputting, or the like.

Further, the movement detecting operation is carried out in various forms. As an example, a method in which a finite difference per unit time of the luminance signal among the detection signals from the image pickup section is determined, and when the finite difference is greater than or equal to a threshold value, it is determined that there is movement, is used.

Moreover, when the detection signal is in the form of YMCK, it is as described above that, with respect to not only the luminance signals, but also Y signal, M signal, and C signal in the same way, a method in which a finite difference per unit time is determined, and when the finite difference is greater than or equal to a threshold value, it is determined that there is movement, is possible.

Further, in the same way, a method in which a contour in the detection signal is detected, and the movement of the contour is observed each unit time by being handled as vector information, and when there is movement greater than or equal to a threshold value, it is determined that movement is detected, is possible. Furthermore, the movement detecting operation of the detection signal is possible in the same way by methods other than these.

In accordance with the various embodiments described above, those skilled in the art can realize the present invention. However, it is easy for those skilled in the art to further conceive of various modified examples of these embodiments, and the present invention can be applied to various embodiments without inventive ability. Accordingly, the present invention extends over a broad range which does not contradict the disclosed principles and the novel features, and is not limited to the embodiments described above.

For example, the PC 26 described as the control device on the network is merely one example, and the PC 26 can be a recorder for the digital images having the similar functions, and in the same way, in accordance therewith, it is possible not only to carry out the image pickup operation, but also to record and playback an picked-up image.

As described above, in accordance with the present invention, in a control device such as a PC by a network or the like, an image pickup apparatus, an image pickup system, and an image pickup method which can reliably include the object within the movement detecting range due to an object in a picked-up screen being easily designated by using a pointing device such as a mouse or the like, at the time of setting a movement detecting range of a movement detecting processing, can be provided.

## Claims

1. An image pickup apparatus **characterized by** comprising:
an image pickup section (11, 13) which picks up an image;
a communication section (18, 19) which transmits the picked-up image to an external device, and which receives control information from the external device; and
a processing section (20) which, in a state in which the image is displayed on a display screen of the external device, when a predetermined region on the display screen is designated, transmits regional information to the external device via the communication section in order to display the predetermined region within the image, and carries out movement detection of the image which is picked up at the image pickup section on the basis of the predetermined region.

2. The image pickup apparatus according to claim 1, **characterized in that** the processing section transmits regional information to the external device via the communication section in order to display the predetermined region within the image, and after a determination signal is received from the communication section in accordance therewith, the processing section carries out movement detection of the image which is picked up at the image pickup section on the basis of the predetermined region.

3. The image pickup apparatus according to claim 1, **characterized in that**, in a state in which the image is displayed as a plurality of block regions on the display screen of the external device, when a predetermined region on the display screen is designated, the processing section transmits regional information to the external device via the communication section in order to display the predetermined region within the image so as to be distinguished from the other region.

4. The image pickup apparatus according to claim 1, **characterized in that**, in a state in which the image is displayed as a plurality of block regions on the display screen of the external device, when a predetermined region on the display screen is designated along with an instruction signal, the processing section displays the predetermined region in the image so as to be distinguished from the other region, and when the predetermined region is designated along with the instruction signal again, the processing section transmits image information generated in order to cancel the distinguishable display, to the external device via the communication section.

5. The image pickup apparatus according to claim 1, **characterized in that**, when the predetermined region on the display screen is designated, the processing section outputs regional information generated in order to display the image in the predetermined region within the image in a state in which the user can distinguish in the same way as an image at the other region, via the communication section.

6. The image pickup apparatus according to claim 1, **characterized in that**, at the processing section, the predetermined region is designated by a pointing device (27) connected to the external device via the communication section.

7. The image pickup apparatus according to claim 1, **characterized by** further comprising:
an image compressing section which compresses the image which is picked up in order to display the image by a browser application at the external device via the communication section.

8. The image pickup apparatus according to claim 1, **characterized by** further comprising:
at least one of a driving section (22, 24) which drives the image pickup section in the panning direction and a driving section (23, 25) which drives the image pickup section in the tilting direction.

9. The image pickup apparatus according to claim 8, **characterized in that** the processing section can set the predetermined region within a range of an image pickup possible screen (AA) in which image pickup is possible by a movement of the image pickup section by the driving section, and carries out movement detection of an image which is picked up at the image pickup section on the basis of the predetermined region.

10. The image pickup apparatus according to claim 1, **characterized in that** the processing section detects a luminance signal of the predetermined region of the picked-up image, and carries out movement detection in accordance with the variation.

11. The image pickup apparatus according to claim 1, **characterized in that** the processing section detects values of color signals of the predetermined region of the picked-up image, and carries out movement detection in accordance with the variations.

12. The image pickup apparatus according to claim 1, **characterized in that** the processing section outputs image information indicating a warning screen via the communication section when the signal variations of the predetermined region of the picked-up image are greater than or equal to a predetermined value.

13. The image pickup apparatus according to claim 1, **characterized by** further comprising:
a control device (26) which receives an image from the image pickup apparatus via the communication section of the image pickup apparatus and displays the image, and which supplies a predetermined region to the image pickup apparatus in accordance with an instruction of the user;
wherein, in a state in which the image is displayed on the display screen of the control device, when a predetermined region on the display screen is designated, the processing section transmits regional information to the control device via the communication section in order to display the predetermined region within the image, and carries out movement detection of the image which is picked up at the image pickup section on the basis of the predetermined region.

14. The image pickup apparatus according to claim 13, **characterized in that** the processing section displays the image as a plurality of block regions, and when the predetermined region is designated, the processing section outputs regional information generated in order to display the predetermined region so as to be distinguished from the other region, to the control device via the communication section.

15. The image pickup apparatus according to claim 13, **characterized in that** the processing section displays the image as a plurality of block regions, and when the predetermined region is designated along with an instruction signal, the processing section displays the predetermined region so as to be distinguished from the other region, and when the predetermined region is designated along with the instruction signal again, the processing section outputs the regional information generated in order to cancel the distinguishable display, to the control device via the communication section.

16. The image pickup apparatus according to claim 13, **characterized in that**, in a state in which the image is displayed on the display screen of the control device, when a predetermined region on the display screen is designated, the processing section transmits the regional information generated in order to display the image within the predetermined region so as to be in a state in which the user can distinguish in the same way as the other image, to the control device via the communication section.

17. An image pickup method **characterized by** comprising:
picking up an image; and
in a state in which the image is displayed on a display screen of an external device via a network, when a predetermined region on the display screen is designated, transmitting regional information generated in order to display the predetermined region within the image, to the external device via the network, and carrying out movement detection of the picked-up image on the basis of the predetermined region.

18. The image pickup method according to claim 17, **characterized by** further comprising:
displaying the image as a plurality of block regions, and when the predetermined region is provided, and outputting the regional information generated in order to display the predetermined region so as to be distinguished from the other region, via the network.

19. The image pickup method according to claim 17, **characterized by** further comprising:
displaying the image as a plurality of block regions, and when the predetermined region is provided along with an instruction signal, displaying the predetermined region so as to be distinguished from the other region, and when the predetermined region is provided along with the instruction signal again, outputting the regional information generated in order to cancel the distinguishable display, via the network.

20. The image pickup method according to claim 17, **characterized by** further comprising:
when the predetermined region on the display screen is designated, outputting the regional information generated in order to display the image within the predetermined region so as to be in a state in which the user can distinguish in the same way as the other image, via the network.
